# EUROPÄISCHE PATENTSCHRIFT

(11) **EP 1 593 296 B1**
(45) Veröffentlichungstag und Bekanntmachung des Hinweises auf die Patenterteilung: **27.06.2007**
(21) Anmeldenummer: 05009672.6
(22) Anmeldetag: 03.05.2005
(51) Int. Cl.: A01C 15/12, A01C 15/00

(54) **Streuvorrichtung, insbesondere für die Ausbringung von fein- bis grobkörnigem Mineraldünger**
Spreading device, in particular for the distribution of fine or coarse granulated mineral fertilizer
Dispositif d'épandage, spécialement pour la distribution de grains fins ou grossiers d'engrais minéral

(30) Priorität: 03.05.2004 DE 102004022041
(43) Veröffentlichungstag der Anmeldung: 09.11.2005
(73) Patentinhaber: Kalkwerk Hufgard GmbH, 63768 Hösbach-Rottenberg (DE)
(72) Erfinder: Hufgard, Alexander, 63768 Hösbach (DE); Englert, Georg, 63879 Weibersbrunn (DE); Blecher, Frank, 61191 Rosbach (DE); Münzner, Richard, 63808 Haibach (DE)
(74) Vertreter: Wolf, Günter

(56) Entgegenhaltungen:
- EP-A- 0 913 077
- DE-A1- 2 141 520
- GB-A- 2 172 483
- US-B1- 6 220 532

## Beschreibung

Die Erfindung betrifft eine Streuvorrichtung, insbesondere für die Ausbringung von fein- bis grobkörnigen Mineraldünger, bestehend aus einem auf einem fahrbaren Chassis angeordneten, trogartigen Streugutvorratsbehälter mit Streugutauslaß, dem ein volumenkleinerer Streugutaufnahme-und-ausgabetrichter mit mindestens einer darunter angeordneter Streuscheibe zugeordnet ist, wobei für die Streugutüberleitung vom Vorratsbehälter zum Aufnahme- und Ausgabetrichter ein den Boden des Vorratsbehälter bildender Endlosförderer vorgesehen ist.

Streuvorrichtungen sind in den verschiedensten Ausführungsformen bekannt, und zwar auch in der Form, bei der der Vorratsbehälter selbst als entsprechend großer Trichter ausgebildet sein muß, um die Gesamtmenge des darin enthaltenen Streugutes im stetigen Zufluß zum Streugutauslaß, damit zu einem Schneckenförderer und damit letztlich auch zum nachgeschalteten, wesentlichen kleineren Trichter zu halten, der dazu dient, das von diesem aus auf die eigentliche Streueinrichtung fallende Streugut feinfühliger dosieren zu können.
Im Vergleich zu gleichhohen aber länglichen Vorratsbehältern mit senkrechter Vorder- und Rückwand und einem den Boden dieser Behälter bildenden Endlosausförderer, die bspw. nach der DE-A-101 08 604 ebenfalls bekannt sind, ist das Aufnahmevolumen eines insgesamt trichterförmigen Vorratsbehälters nicht unwesentlich kleiner, die auch nicht beliebig mit Rücksicht auf den einzuhaltenden Schüttwinkel für die Trichterseitenwände vergrößert werden können. Abgesehen davon kommt noch hinzu, daß solche Vorratsbehälter absolut rieselfähiges, also praktisch granuliertes und trockenes Schüttgut verlangen, um von vornherein Brückenbildungen zu begegnen, die insbesondere per se auch dadurch gegeben sind, daß die horizontalen Trichterquerschnitte zum Auslaß hin zwangsläufig immer kleiner werden.

Diesen Nachteilen trägt die Streuvorrichtung der eingangs genannten Art nach der DE-A-101 08 604 insofern Rechnung, als hierbei mit einer besonders ausgestalteten Streugutüberleitung vom länglich-trogartig ausgebildeten Vorratsbehälter in den nachgeschalteten Dosiertrichter für eine trotz ständig laufenden Endlosförderer sich selbst regelnde Streugutausförderung zur eigentlichen Streuscheibe gesorgt wird, was jedoch eine besondere Ausgestaltung des nachzuordnenden Trichters bzw. den Umbau bereits verfügbarer Trichter verlangt und gegf. auch eine Abdichtung des aus dem Trichter auslaufenden unteren Trumms des Endlosförderers.

Eine ähnliche Streuvorrichtung ist aus der US-B-6 220 532 bekannt. Diese Vorrichtung weist einen horizontalen Schneckenförder auf, um das Streugut in den Ausgabetrichter zu fördern.

Ausgehend von einer Streuvorrichtung der eingangs genannten Art liegt der Erfindung die Aufgabe zugrunde, eine Streuvorrichtung der eingangs genannten Art unter Beibehaltung von deren gegenüber trichterförmigen Vorratsbehältern bestehenden Vorteilen dahingehnd abzuändern und zu verbessern, daß übliche, d.h., keine besondere Ausgestaltung verlangende Dosiertrichter verwendbar sind, eine sich selbst regelnde und Imponderabilien unterworfene Streugutausförderung vermieden und die Streugutförderung zum volumenkleineren Trichter in Abhängigkeit von der internen Streugutförderung im Vorratsbehälter durchführbar ist.

Diese Aufgabe ist mit einer Streuvorrichtung der eingangs genannten Art nach der Erfindung dadurch gelöst, daß zwischen dem Vorratsbehälter und dem Trichter ein ansteigend auf Trichteröffnungshöhe geneigter, rohrförmiger Schneckenförderer mit in den Trichter gerichteten Auslaß angeordnet ist und der Schneckenförderer mit seinem Streugutaufnahmeende die Vorratsbehälterrückwand abgedichtet durchgreift und mit seinem Ende unmittelbar über dem Endlosförderer angeordnet ist, und daß sowohl im Bereich des Endes des Schneckenförderers im Vorratsbehälter als auch im Trichter Füllstandsensoren angeordnet sind, die via einer Vorrichtungssteuerung mit den Antrieben des Schneckenförderers und des Endlosförderers verschaltet sind.

Vorteilhafte Weiterbildungen dazu ergeben sich nach den abhängigen Patentansprüchen.

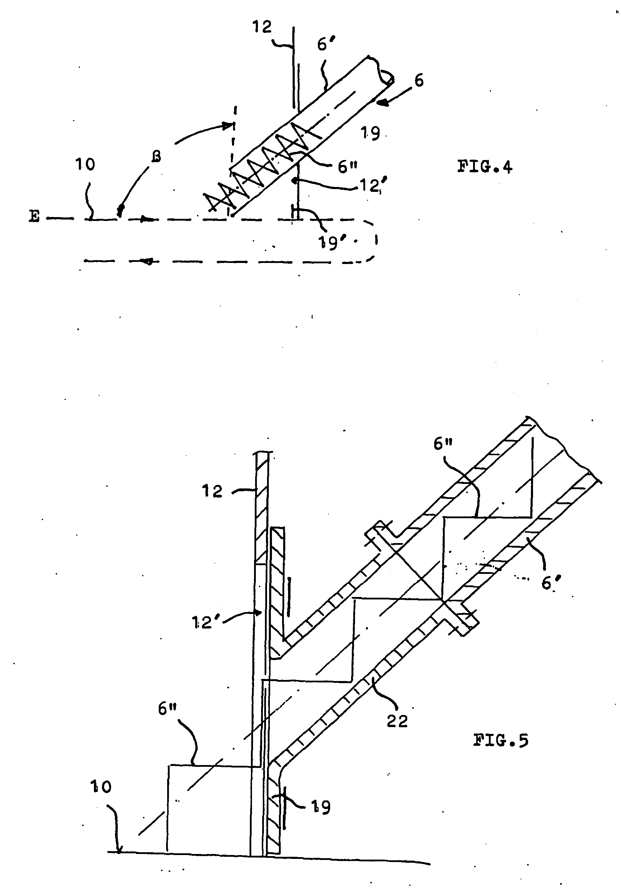

Abgesehen davon, daß rohrförmige Schneckenförderer grundsätzlich bekannt sind und diese auch bei großen, trichterförmigen Vorratsbehältern, wie einleitend erläutert, verwendet werden, an denen diese Förderer außen angesetzt sind und mit ihrer Zufuhröffnung die Auslaßöffnung des Trichters untergreifen (siehe Fig.3), taucht bei der erfindungsgemäßen Lösung der Schneckenförderer mit seinem Aufnahmeende in den trogartigen Vorratsbehälter ein und nimmt das darin befindliche Streugut unmittelbar aus der Streugutmasse auf, d.h., ohne daß dieses eine enge Auslaßöffnung passieren muß.

Ganz wesentlich ist dabei auch die kombinierte Steuerung der ganzen Vorrichtung, die sich nicht nur auf den volumenkleineren Aufnahme- und Auslaßtrichter bzw. Dosiertrichter beschränkt, sondern auch auf den trogartigen Vorratsbehälter, bei dessen Steuerung es nicht mehr darum geht, bei Nachschubanforderung vom Dosiertrichter her für Nachschub zu sorgen, sondern im Inneren des Vorratsbehälters das nach Teilentleerung stehengebliebene Streugut zum offenen Aufnahmeende des Schneckenförderers hin im Vorratsbehälter gewissermaßen umzuschichten. Dies bedeutet, daß der Endlosförderer im Vorratsbehälter nur dann in Gang gesetzt werden muß, wenn der Einzugsbereich des Schneckenförderers leer gefahren ist, wobei bis dahin der Schneckenförderer, gewissermaßen aus dem Vollen schöpfend, nur dann in Gang gesetzt wird, wenn dies der Füllstandssensor im Dosiertrichter verlangt.

Die erfindungsgemäße Streuvorrichtung und deren vorteilhaften Ausführungsformen gemäß der Unteransprüche werden nachfolgend anhand der zeichnerischen Darstellung von Ausführungsbeispielen näher erläutert.

### Es zeigt

- Fig.1: schematisch und in Seitenansicht die Streuvorrichtung;
- Fig.2: einen Schnitt durch die Streuvorrichtung längs Linie II-II in Fig.1;
- Fig.3: schematisch eine Vergleichsdarstellung eines trichter-förmigen Vorratsbehälter zum trogförmigen gemäß Fig.1;
- Fig.4: vergrößert das in den Vorratsbehälter einragende Ende des Schneckenförderers und
- Fig.5: in Seitenansicht und im Schnitt eine besondere Ausführungsform des Schneckenförderers.

Die Streuvorrichtung besteht nach wie vor, d.h. in bekannter Weise, aus einem auf einem fahrbaren Chassis 1 angeordneten, trogartigen Streugutvorratsbehälter 2 mit Streugutauslaß 3, dem ein volumenkleinerer Streugutaufnahme- und -ausgabetrichter 4 bzw. Feindosiertrichter mit mindestens einer darunter angeordneter Streuscheibe 5 zugeordnet ist, wobei für die Streugutüberleitung vom Vorratsbehälter 2 zum Aufnahme- und Ausgabetrichter 4 ein den Boden des Vorratsbehälter 2 bildender Endlosförderer 10 vorgesehen ist.

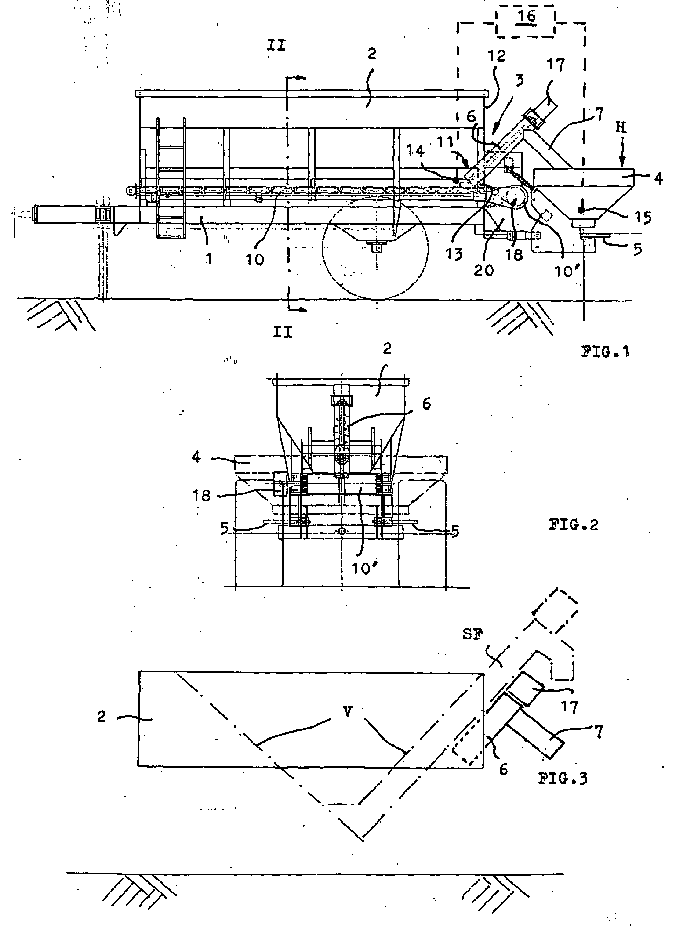

Für eine solche Streuvorrichtung ist nun unter Verweis auf die Fig. 1,2 wesentlich, daß zwischen dem Vorratsbehälter 2 und dem Dosiertrichter 4 ein geneigter, auf über Trichteröffnungshöhe H ansteigender, rohrförmiger Schneckenförderer 6 mit in den Trichter 4 gerichteten Auslaß 7 angeordnet ist. Der Schneckenförderer 6 durchgreift dabei mit seinem Streugutaufnahmeende 11 abgedichtet die Vorratsbehälterrückwand 12 und ist mit seinem Ende unmittelbar über dem Endlosförderer 10 im Vorratsbehälter 2 angeordnet. "Auf über Trichteröffnungshöhe H ansteiegend" ist dabei so zu verstehen, daß das in die Trichteröffnung zu richtende Auslaßrohr 7 noch unmittelbar unter dem Antrieb 17 am Rohr des Schneckenförderers 6 angesetzt werden kann.

Außerdem sind sowohl im Bereich des Endes 13 des Schneckenförderers 6 im Vorratsbehälter 2 als auch im Trichter 4 Füllstandsensore 14, 15 vorgesehen, die via einer vorrichtungssteuerung 16 mit den Antrieben 17,18 des Schneckenförderers 6 und des Endlosförderers 10 verschaltet sind.

Das Steuerungssystem ist in Fig.1 gestrichelt und schematisch mit angedeutet, wobei darauf hingewiesen sei, daß am Dosier - trichter 4 auch ein oberer Füllstandsensor angeordnet werden kann, der bei Erreichen dieses Füllstandes den Schneckenförderer 6 abschaltet.

Um den Einzug des Streugutes am Streugutaufnahmeende 11 des Schneckenförderers so optimal wie möglich wirken zu lassen, ist vorteilhaft das geneigt angeordnete und gegen den Endlosförderer 10 gerichtete Rohr 6' des Schneckenförderers 6 in Bezug auf die Erstreckungsebene E des Endlosförderers 10 unter Freistellung des Endes der Förderschnecke 6" unter einem stumpfen Winkel ß abgeschnitten, wie dies in Fig.4 bspw. dargestellt ist. Der Winkel kann dabei in Abhängigkeit von der Schneckenfördererneigung 91° und mehr betragen, wobei die Winkelgrößenbemessung ihr Ende durch die Rückwand 12 findet.

Was den Durchgriff des Schneckenförderrohres 6'durch die Rückwand 12 betrifft, so ist diese mit einer in Bezug auf den Querschnitt des Schneckenförderers 6 größeren Durchgriffsöffnung 12' und der Schneckenförderer 6 mit einem die Durchgriffsöffnung 12' abdeckenden Anschlußflansch 19 versehen. Diese Maßgabe berücksichtigt, daß derartige trogförmigen Vorratsbehälter 2 per se mit einer solchen Öffnung 12' versehen sind, die normalerweise mit einem einstellbaren Schieber bzgl. ihres Querschnittes für eine Grobregelung der vom Endlosförderer 10 ausgeförderten Streugutmenge dienen. Sofern die dafür per se vorhandene Öffnung mit Rücksicht auf das geneigt einzusetzenden Rohr 6' zu klein sein sollte, so ist bei Umrüstung die Öffnung lediglich nach oben mit einer entsprechenden Ausschnittserweiterung für den Durchgriff des Rohres 6' zu versehen. Die untere Randkante des Flansches dient dabei als Rakel für den Endlosförderer oder gegf. auch zur Aufnahme einer dort anzuordnenden besonderen Rakelleiste 19'(siehe Fig.4).

Wie aus Fig.1 ersichtlich, überragt der Endlosförderer 10 mit seiner Wendetrommel 10' die von ihm abgerakelt durchgriffene Behälterrückwand 12. Im Zusammenhang damit ist außen an der Behälterrückwand 12 oder auch direkt am Chassis 1 ein Halter 20 angeordnet, an dem der geneigte Schneckenförderer 6 und der Trichter 4 befestigt sind und an dem die Wendetrommel 10' des Endlosförderers 10 mit ihrem außen angesetzten Antrieb 18 gelagert ist.

In Fig.3 ist übrigens stark schematisiert, d.h., unter Weglassung allen Zubehörs der vorbeschriebene, trogförmige Vorratsbehälter 2 mit seinem Schneckenförderer 6 dargestellt, dem, um den Unterschied bzgl. des Fassungsvermögens und der Streugutzuförderung zum Dosiertrichter 4 zu verdeutlichen, strichpunktiert der einleitend vorerwähnte, trichterförmige Vorratsbehälter V mit seinem außen angesetzten Schneckenförderer SF überlagert dargestellt ist.

In Fig.5 ist eine besonders montage- und umrüstungsfreundliche Ausführungsform des Schneckenförderers 6 dargestellt, die an die zu Fig.4 vorerläuterte Flanschausbildung anknüpft.
Hiernach ist der Anschlußflansch 19 als die Durchgriffsöffnung 12'abdeckender Schieber ausgebildet und dieser ist auf der der Öffnung abgewandten Seite mit einem Flanschstutzen 22 versehen, an den der Schneckenförderer 6 anflanschbar ist. Die Schnecke 6" ist dabei mit ihrer Länge so bemessen, daß sie öffnungsseitig und bis angenähert zum Endlosförderer 10 reichend aus dem Flanschstutzen 22 herausragt.

## Patentansprüche

1. Streuvorrichtung, insbesondere für die Ausbringung von feinbis grobkörnigen Mineraldünger, bestehend aus einem auf einem fahrbaren Chassis (1) angeordneten, trogartigen Streugutvorratsbehälter (2) mit Streugutauslaß (3), dem ein volumenkleinerer Streugutaufnahme- und -ausgabetrichter (4) mit mindestens einer darunter angeordneter Streuscheibe (5) zugeordnet ist, wobei für die Streugutüberleitung vom Vorratsbehälter (2) zum Aufnahme- und Ausgabetrichter (4) ein den Boden des Vorratsbehälter (2) bildender Endlosförderer (10) vorgesehen ist,
**dadurch gekennzeichnet,**
**daß** zwischen dem Vorratsbehälter (2) und dem Trichter (4) ein ansteigend auf Trichteröffnungshöhe geneigter, rohrförmiger Schneckenförderer (6) mit in den Trichter (4) gerichteten Auslaß (7) angeordnet ist und der Schneckenförderer (6) mit seinem Streugutaufnahmeende (11) die Vorratsbehälterrückwand (12) abgedichtet durchgreift und mit seinem Ende unmittelbar über dem Endlosförderer (10) angeordnet ist, und daß sowohl im Bereich
des Endes (13) des Schneckenförderers (6) im Vorratsbehälter (2) als auch im Trichter (4) Füllstandsensoren (14,15) angeordnet sind, die via einer Vorrichtungssteuerung (16) mit den Antrieben (17,18) des Schneckenförderers (6) und des Endlosförderers (10) verschaltet sind.

2. Streuvorrichtung nach Anspruch 1,
**dadurch gekennzeichnet,**
**daß** das geneigt angeordnete und gegen den Endlosförderer (10) gerichtete Rohr (6') des Schneckenförderers (6) in Bezug auf die Erstreckungsebene (E) des Endlosförderers (10) unter Freistellung des Endes der Förderschnecke (6") unter einem stumpfen Winkel β abgeschnitten ist.

3. Streuvorrichtung nach Anspruch 1 oder 2,
**dadurch gekennzeichnet,**
**daß** die Behälterrückwand (12) mit einer in Bezug auf den Querschnitt des Schneckenförderers (6) größeren Durchgriffsöffnung, (12') und der Schneckenförderer (6) mit einem die Durchgriffsöffnung (12') abdeckenden Anschlußflansch (19) versehen ist.

4. Streuvorrichtung nach Anspruch 3,
**dadurch gekennzeichnet,**
**daß** der Anschlußflansch (19) als die Durchgriffsöffnung (12') abdeckender Schieber ausgebildet,und dieser auf der öffnungsabgewandten Seite mit einem Flanschstutzen (22) versehen und an diesem der Schneckenförderer (6) angeflanscht ist, dessen Schnecke (6') öffnungsseitig und bis angenähert zum Endlosförderer (10) reichend aus dem Flanschstutzen (22) herausragt.

5. Streuvorrichtung nach einem der Ansprüche 1 bis 4,
**dadurch gekennzeichnet,**
**daß** der Endlosförderer (10) mit seiner Wendetrommel (10') die von ihm durchgriffene Behälterrückwand (12) abgerakelt überragt.

6. Streuvorrichtung nach einem der Ansprüche 1 bis 5,
**dadurch gekennzeichnet,**
**daß** außen an der Behälterrückwand (12) oder am Chassis (1) ein Halter (20) angeordnet ist, an dem der geneigte Schneckenförderer (6) und der Trichter (4) befestigt sind und die Wendetrommel (21) des Endlosförderers (10) gelagert ist.

## Claims

1. Spreading device, in particular for the application of fine- to coarse-grained mineral fertilisers, consisting of a trough-like spreading material storage container (2) arranged on a portable chassis (1) with a spreading material outlet (3), to which is assigned a smaller volume spreading material receiving and discharge funnel (4) with at least one spreading disc (5) arranged underneath it, wherein an endless conveyor (10) forming the base of the storage container (2) is provided for the transfer of the spreading material from the storage container (2) to the receiving and discharge funnel (4), **characterised in**
**that** an inclined, tubular worm conveyor (6), rising to the funnel (4) opening height, is arranged with an outlet (7) directed into the funnel (4), and the worm conveyor (6) penetrates the rear wall (12) of the storage container (2) with its spreading material receiving end (11) in a sealed fashion, and in that both filling level sensors (14, 15) are arranged both in the region of the end (13) of the worm conveyor (6) in the storage container (2) and in the funnel (4), which sensors are switched via a device control system (16) with the drives (17, 18) of the worm conveyor (6) and of the endless conveyor (10).

2. The spreading device according to Claim 1,
**characterised in**
**that** the tube (6') of the worm conveyor (6) arranged at an inclined angle and directed against the endless conveyor (10) is cut off at an obtuse angle β relative to the plane of extension (E) of the endless conveyor (10) with the release of the end of the conveyor worm (6'').

3. The spreading device according to Claim 1 or 2,
**characterised in**
**that** the rear container wall (12) is provided with a penetration opening (12') that is larger than the cross-section of the worm conveyor (6) and in that the worm conveyor (6) is provided with a connecting flange (19) covering the penetration opening (12').

4. The spreading device according to Claim 3,
**characterised in**
**that** the connecting flange (19) is designed as a slide covering the penetration opening (12'), and in that it is provided with a flanged support (22) on the side facing away from the opening, and is flanged on that of the worm conveyor (6) whose worm (6') projects sufficiently from the flanged support (22) on the opening side and approximately as far as the endless conveyor (10).

5. The spreading device according to one of Claims 1 to 4,
**characterised in**
**that** the endless conveyor (10) projects in a scraping fashion with its reversing drum (10') from the rear container wall (12) penetrated by the conveyor.

6. The spreading device according to one of Claims 1 to 5,
**characterised in**
**that** a support (20)is arranged on the outside of rear container wall (12) or on the chassis (1), on which support are fastened the inclined worm conveyor (6) and the funnel (4) and on which support is mounted the reversing drum (21) of the endless conveyor (10).

## Revendications

1. Dispositif de dispersion, notamment pour la distribution d'engrais minéral en grains fins à grossiers, composé d'une cuve de réserve de produit d'épandage en forme d'auge (2) disposée sur un châssis déplaçable (1) et équipée d'une sortie de produit d'épandage (3), à laquelle est associée une trémie réceptrice et distributrice de produit d'épandage (4) d'un volume inférieur sous laquelle est disposée au moins une plaque de dispersion (5), dans lequel il est prévu pour le transfert du produit d'épandage depuis la cuve de réserve (2) jusqu'à la trémie réceptrice et distributrice (4) un convoyeur continu (10) constituant le fond de la cuve de réserve (2),
**caractérisé en ce que,**
entre la cuve de réserve (2) et la trémie (4), est disposé un convoyeur à vis de forme tubulaire (6) incliné de manière ascendante à la hauteur de l'orifice de la trémie et comportant une sortie (7) dirigée dans la trémie (4) et que le convoyeur à vis (6) traverse de manière étanche par son extrémité réceptrice de produit d'épandage (11) la paroi arrière de la cuve de réserve (12) et est disposé par son extrémité directement au dessus du convoyeur continu (10), et qu'aussi bien au niveau de l'extrémité (13) du convoyeur à vis (6) dans la cuve de réserve (2) que dans la trémie (4), il est disposé des capteurs de niveau (14, 15) qui, via une commande de dispositif (16), sont branchés aux propulsions (17, 18) du convoyeur à vis (6) et du convoyeur continu (10).

2. Dispositif de dispersion selon la revendication 1,
**caractérisé en ce que**
le tuyau (6') du convoyeur à vis (6) disposé inclinée et dirigé vers le convoyeur continu (10) est coupé suivant un angle obtus β par rapport au plan d'extension (E) du convoyeur continu (10) en dégageant l'extrémité de la vis de convoyage (6'').

3. Dispositif de dispersion selon la revendication 1 ou 2,
**caractérisé en ce que**
la paroi arrière de la cuve (12) est pourvue d'une ouverture de passage (12') plus grande que la section transversale du convoyeur à vis (6) et que le convoyeur à vis (6) est pourvu d'une bride de raccordement (19) recouvrant l'ouverture de passage (12').

4. Dispositif de dispersion selon la revendication 3,
**caractérisé en ce que**
la bride de raccordement (19) est réalisée sous forme d'une tirette recouvrant l'ouverture de passage (12') et qu'elle est pourvue, du côté détourné de l'ouverture, d'un support de bride (22) et qu'est bridé dessus le convoyeur à vis (6) dont l'ouverture de vis (6') dépasse, jusqu'à proximité du convoyeur continu (10), du support de bride (22).

5. Dispositif de dispersion selon une des revendications 1 à 4,
**caractérisé en ce que**
le convoyeur continu (10) dépasse par son tambour d'inversion (10') de la paroi arrière de la cuve (12) qu'il traverse en la râclant.

6. Dispositif de dispersion selon une des revendications 1 à 5,
**caractérisé en ce que,**
sur l'extérieur de la paroi arrière de la cuve (12) ou sur le châssis (1) est disposé un support (20) sur lequel le convoyeur à vis incliné (6) et la trémie (4) sont fixés et le tambour d'inversion (21) du convoyeur continu (10) s'appuie.
